# EUROPEAN PATENT SPECIFICATION

(11) **EP 3 535 136 B1**
(45) Date of publication and mention of the grant of the patent: **16.09.2020**
(21) Application number: 17812036.6
(22) Date of filing: 30.10.2017
(51) Int. Cl.: B60B 33/00, H01F 27/00

(54) **WHEEL SUPPORT AND WHEEL FOR ELECTRIC TRANSFORMER**
RADSTÜTZE UND RAD FÜR ELEKTRISCHEN TRANSFORMATOR
SUPPORT DE ROUE ET ROUE POUR TRANSFORMATEUR ÉLECTRIQUE

(30) Priority: 07.11.2016 IT 201600110680
(43) Date of publication of application: 11.09.2019
(73) Proprietor: CDR ITALY s.r.l., 50041 Calenzano (FI) (IT)
(72) Inventor: BARACCO, Pietro, 50021 Barberino Val D'elsa (FI) (IT); PAVLOVIC, Ana, 40133 Bologna (IT)
(86) International application number: PCT/IB2017/001306
(87) International publication number: WO 2018/083527

(56) References cited:
- EP-A1- 1 725 411
- EP-A2- 2 241 455
- WO-A1-2015/004690
- WO-A1-2015/175804
- DE-B- 1 263 171

## Description

### TECHNOLOGICAL FIELD

The present invention relates to the sector of industrial wheels, particularly the sector of wheels for electric transformers, even more particularly the wheels for the movement of oil and resin electric transformers for distribution of electric energy.

### BACKGROUND ART

From time immemorial is known the wheel concept, generally constituted by an element, denominated roller, rotating about a hub or shaft and turnably connected to a support fork, in turn connected to a mean to be moved.

In the electric transformer field is particularly felt the problem of handling. This big and heavy apparatuses need to be occasionally moved for maintenance or the installation (entry into service), while the remaining period of time they are not moved and stay connected to an electrical grid.

The weight of the electric transformer statically loads for a long time on a plurality of wheels, generally four, which consequently need to resist to the static deformations and to high static loads.

During these long stopping periods, the heavy weight of the electric transformer loads on the support, on the hub (or shaft) and on the roller. For this reason, these components of the wheel are often realized with very hard and resistant materials.

An electric transformer for the distribution of electric energy, also named distribution transformer, can weight up to 8-10 tons, starting from minimal weights of 1.000-1.500 kg, in particular the cast resin dry-type transformers and the oil-type transformers.

Besides to vertical static loads, the wheels supporting an electric transformer need to resist to high dynamic vertical loads which occur during the positioning on the floor of the electric transformer itself.

Furthermore, the wheels of the electric transformer need to be occasionally rotated with respect to the electric transformer to allow diagonal or lateral displacements of the electric transformer. Consequently, the edge of the roller touching the ground and the connection area of the roller shaft with the fork are significantly exposed to lateral and torsional load respectively.

Actually, to solve the above-mentioned problems, the state of the art comprises wheels for electric transformers wherein the roller is made of cast iron, because of the good resistance to compression and hardness of this metal material.

The cast iron rollers are very fragile and can easily break in case of collisions of the roller with the ground. Furthermore, these rollers are often not perfectly round and the rolling is often compromised.

Wheels with nylon rollers are also known and allow to reduce manufacturing and logistic costs without compromising the resistance to compression and the hardness.

Generally, the cast iron rollers are connected to a metallic support through a metallic shaft. The shaft is inserted in the cast iron roller and subsequently fixed to the support to permit the rolling of the roller with respect to the support.

In the electric transformer sector is also felt the problem of the corrosion resistance and of exposure to humidity in wide ranges of temperature, because these transformers are most of the time positioned outside and sometime close to the sea, and consequently exposed to bad weather conditions.

For this reason, the cast iron rollers for electric transformers are painted. However, when the wheels are positioned on the ground or roll on a not planar and clean surface, this painting can break or deteriorates, creating potential zones from which the corrosion can start. Furthermore, in case of cast iron rollers, the eventual rust can create joining points between roller and metal hub, blocking the rolling of the wheel.

Similarly, also the metal support of nylon or cast iron wheels need to be hot-dip galvanized or painted.

The required standards for the resistance to corrosion, in particular for satisfying the rule NFA 91-020 on metal component coatings for corrosion tests, impose paint thicknesses for supports and rollers of 40-100 µm or hot-dip galvanizing of the support and hub of 9-15 µm.

These types of treatments can have imperfections and so generate a certain percentage of defects in term of corrosion and, in any case, they are very expensive. Furthermore, the painting and galvanizing treatments obstruct the threaded holes or thicken the thread of anchoring bolts, compromising the fastening and the fixing of the wheel to the transformer.

The transformer wheels known in the state of the art are heavy and consequently difficult to be transported. In particular, the wheels with cast iron rollers can weight 11 kg when the roller has a diameter of 200 mm, and, if the rollers are made of nylon, the weight of the wheel can be 6 kg for diameters of about 200 mm. For a wheel with a cast iron roller having a diameter of 125 mm, the weight is about 2,4 kg, while for a wheel with nylon roller having a diameter of 125 mm the weight is 1,2 kg. In both cases the wheels have metal supports.

Consequently, the transportation of wheels so heavy implies high logistic costs for moving the wheels from the manufacturing/stocking places to the installation places.

Finally, the manufacturing of cast iron rollers implies to cast them in a foundry, to bend, forge and punch the support in a machine shop, thus involving two different manufacturing processes. A similar complication occurs for the creation of wheels with a nylon roller, because the nylon roller is moulded at the moulder of plastic material, while the support is realized like that of the cast iron wheels.

Furthermore, the nylon rollers of the state of the art use hubs, named also shafts, made of metal, which are not embedded in the roller. In this type of wheels, the hub can accidentally moves from the roller and/or the support, causing the block of the roller or even worst its rupture.

The known solutions in the state of the art do not resolve the above-mentioned technical problems in an effective and economic way. In particular, they do not allow to provide a solution for obtaining a wheel, thus a roller and its support, which permits to contemporary solve the problems of resistance to corrosion, humidity and temperature, which is light, easy to manufacture and assembly and furthermore resistant to elevated vertical and lateral dynamic loads. A wheel support and a wheel for electrical transformer are known respectively from EP 2 241 455 A2 and WO 2015/004690 A1.

### SUMMARY

The above-mentioned disadvantages of the background art are now solved by a wheel for electric transformer comprising a support according to the claims and description which follow, and a roller to the claims and description which follow.

In particular, said disadvantages are solved by a wheel support for distribution electric transformer comprising:
- a fork made of a composite material comprising a upper portion connectible to an electric transformer; two vertical portions monolithically connected to the upper portion, each one comprising a portion configured to receive and turnably support a roller and in particular a pivot of the roller; wherein said vertical portions comprise a plurality of ribs bottom-up oriented.
- a couple of blocking elements each one of them being configured to be connected to one of the two vertical portions of the support. Said elements permitting to contain and retain said roller or the pivot connected to the support.

In this manner, the roller, or its pivot, can be rapidly and safely coupled to the support, without the need for riveting the pivot over the support as in the case of existing wheels for electric transformer.

Advantageously said wheel support for an electric distribution transformer allows to resist to high vertical and lateral loads, both instantaneous or static. Said support so conceived is corrosion proof and excellently resists to high excursions of temperatures or humidity, without altering its mechanical or physic properties.

Furthermore, the support so conceived is extremely light and consequently it's easily transportable.

Said support can be entirely realized in polyamide, preferably PA 6 or PA 6,6. The polyamide is preferably reinforced with glass fiber to provide to the support the required mechanical resistance to vertical and lateral loads.

In particular, the percentage of glass fiber can be comprised between 20% and 60%, preferably between 30% and 50%.

This percentage further improves the mechanical properties of the support.

Using reinforced nylon, the support can be moulded through injection moulding.

This manufacturing technique is rapid and efficient and allow to obtain supports which are really consistent, in terms of tolerances and geometry, with the product design.

The ribs of the support can be oriented in a substantially radial direction with respect to said portion configured to receive and turnably support a roller ad its pivot of the roller.

This orientation of the ribs allows to efficiently unload the vertical loads acting on the support. Furthermore, these ribs increase the torsional resistance of the support itself about the vertical axis, so increasing the resistance to lateral loads.

The support can be oriented with respect to the electric transformer by means of orientable rotable connection means.

This orientable rotable connection means can comprise a threaded element, fittable in a first slot of the upper portion configured to receive at least in part the threaded element and to stop its rotation about a vertical axis. The threaded element being connectible with a complementary threaded element of the electric transformer for realizing said connection to the electric transformer.

The connection between said threaded element and said complementary threaded element of the electric transformer allows to realize a vertical fulcrum of the support with respect the transformer.

The possibility to insert threaded elements allow to have threaded surfaces always clean and geometrically suitable for performing the connection.

These orientable rotable connection means can further comprise a hole or a bump arranged on a contact surface with the electric transformer of the upper portion and configured to set one or more orientations of connection of said support to said electric transformer. This hole or bump allows to set the orientation of the support relative to the transformer in an economic and simple way.

The support can further comprise a lateral pit configured to cooperate with a lever for facilitating the rotation of the support relative to the electric transformer according to the vertical axis. This technical characteristic allows to rotate the support relative to the transformer even if the support is loaded with the weight of the transformer.

To facilitate the rotation of the support with respect to the transformer, the support can comprise an annular bush or an axial bearing inserted in a second slot of the upper portion of the support.

To avoid that dirt enters in the contact zone between roller and support, said support comprises a couple of caps, each one configured to be snap-fitted to one of the vertical portions and blocking elements.

The vertical portions of the support can comprise a stopping system configured to prevent the rotation of the roller about its rotational axis. Said system allows to lock the rotation of the roller and prevent the movement of the electric transformer.

A second object of the present invention is a wheel comprising a support according to the first object of the present invention and a roller having a pivot made of composite material.

Said wheel so conceived is extremely light, easy to be manufactured and easy to be assembled. The roller can comprise a pivot, integrally connected to the roller itself.

Said roller can be entirely made of polyamide, preferably PA 6 or PA 6,6, reinforced with glass fiber in a weight percentage comprised between 20% and 60%, preferably between 30% and 50%.

The roller so conceived can resist to high radial static compression loads, even higher than 10.000 N, preferably higher than 25.000 N.

To further increase the resistance to radial loads, the roller can comprise a plurality of substantially radial ribs extending on both side of the roller from the pivot to a portion substantially cylindrical of the roller configured to roll on a flat surface or on the ground.

Said roller can have a diameter comprised between 100 and 300 mm, preferably comprised between 125 and 200 mm.

The support and the roller of the present invention can be extremely resistant to the corrosion, in particular the saline corrosion, to the humidity and to the extreme ambient temperatures.

A further scope of the present invention is an electric transformer having a plurality of wheels according to the present invention.

These and other advantages will be better understood thanks to the following description of different embodiments of said invention given as non-limitative examples thereof, making reference to the annexed drawings.

### DRAWINGS DESCRIPTION

In the drawings:
Fig. 1 shows an axonometric view of a support according to the present invention;
Fig. 2 shows an axonometric view, partially exploded, of a support according to the present invention;
Fig. 3 shows an axonometric view of a roller according to the present invention;
Fig. 4 shows an axonometric view of a wheel according to the present invention
Fig. 5 shows an axonometric view of a wheel according to a second embodiment;
Fig. 6 shows an axonometric view of an electric transformer according to the present invention.

### DETAILED DESCRIPTION

The following description of one or more embodiments of the invention is referred to the annexed drawings.

The same reference numbers indicate equal or similar parts. The object of the protection is defined by the annexed claims.

Technical details, structures or characteristics of the solutions here-below described can be combined each other in any suitable way.

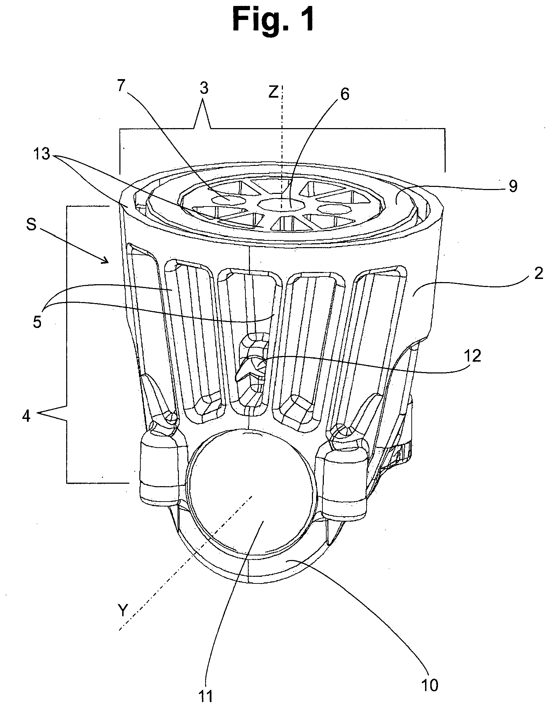

To comprehend the idea supporting the present invention, reference can be done to figures 1, 2, 3 and 4.

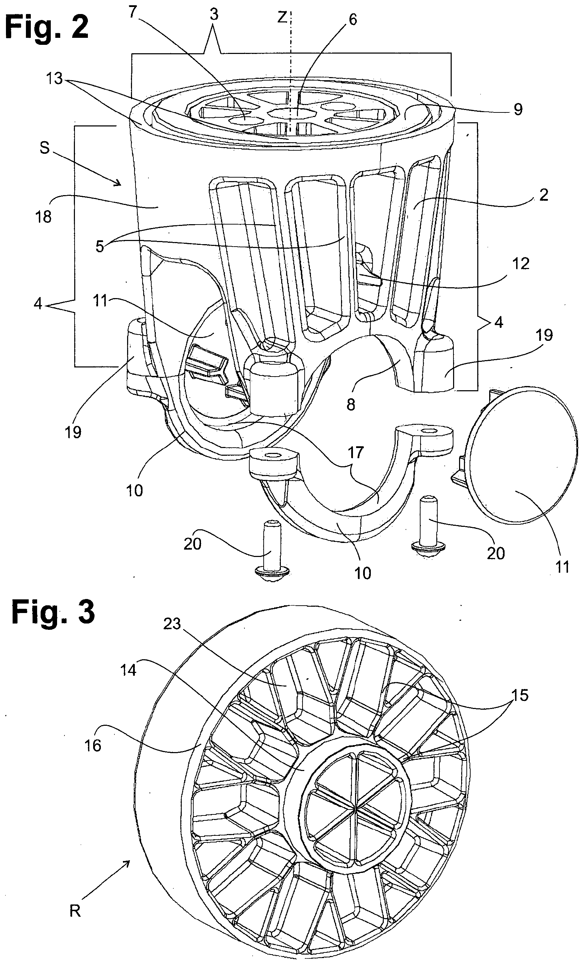

In particular, the Fig. 1 and 2 show a support according to the present invention wherein a fork 2 comprises a upper portion 3 configured for being connectible to the lower base of an electric transformer (not shown) and two vertical portions 4 extending from the upper portion 3 until to a portion able to receive a roller, or a pivot of the roller.

The upper portion 3 comprises a upper surface 13 configured for connecting the support connection with a beam of the lower base of the electric transformer. Said surface 13 comprises a plurality of lightening recesses and a first slot configured to receive a threaded element 6, thus an element having a thread on the inner or outer surface, like for example a nut or a bolt. This slot has a shape configured to permit the insertion of the threaded element 6 and to stop its rotation about the vertical axis Z once inserted.

Preferably, said first slot is realized in the lower part of the upper portion 3 and has a threaded or hexagonal prism shape to receive a threaded element 6 having an outer surface with hexagonal cross-section, like a bolt or a nut. Said threaded element 6 is inserted in the first slot of the upper portion 3 up to an end of stroke wherein the element 6 touches a surface (not shown) of the upper portion 3 itself.

The threaded element 6 is configured to cooperate with a bolt/nut of the electric transformer to realize a connection of the support S to the transformer itself.

The connection so realized with the transformer is of axial type and allows to rotate the support S relative to the electric transformer. It is so provided an orientable rotable connection.

In a alternative version (not shown), the support S comprises two first slots to receive two nuts or two bolts. Said slots have axes lying on a common plane, which in turn is orthogonal to the rotational axis Y of the roller R.

To set one or more positions of the support with respect to the electric transformer and consequently one or more rolling orientations for the roller, said orientable rotable connection means can comprise a hole 7, a pit (not shown) or a pin (not shown) arranged on the contact surface 13 of the support with the electric transformer.

Said hole 7 or pin are eccentric with respect to the rotational axis of the support Z.

The transformer can be oriented respective the support by means of an element having a shape complementary to the hole 7. When the support S has a hole 7, the contact surface of the electric transformer with the support S can comprise one or more vertical projections (not shown) each one adapted to enter in the hole 7 if a rotation of the support S brings the projection over said hole 7. For example, said projections of the transformer can be arranged at 0°, 45° and 90° with respect to the wheelbase direction of the transformer, so to allow an orientation of the support S respectively at 0°, 45° or 90°.

The same principle of selection of the orientation, but applied in a inverse manner, occurs when the support S has a projection (not shown). In this case, the transformer comprises one or more holes or pits (not shown), each one adapted to receive said projection if the rotation of the support S relative to the axis Z of a predetermined amount of degrees occurs.

Said upper portion 3 of the support S can further comprise a second slot having a substantially annular shape, configured to receive a bushing 9 or alternatively an axial bearing (not shown). Said bushing 9 having an annular shape and can be realized in a material having a low friction coefficient, for example PTFE.

Said bushing 9, once installed in the second slot of the support S, slightly protrudes in vertical with respect to the surface 13, so to be always in contact with the electric transformer when said connection between S and the electric transformer occurs: The bushing 9 or the axial bearing facilitates the rotation of the support S with respect to the electric transformer.

With particular reference to Figure 2, the fork 2 of the support S further comprises two vertical portions 4 extending vertically downwardly from the upper portion 3 and being monolithically connected to it.

Said vertical portions 4 are the prongs of the fork and are configured to support a pivot. Said vertical portions comprise a plurality of strengthening ribs 5 oriented upward. Said ribs 5 can have a width comprised between 4 and 10 mm, preferably from 5 to 9 mm. Said ribs 5 are preferably oriented in a substantially radial manner with respect to the portion fitted to received said pivot or with respect to the rotational axis of the pivot/roller, thus to the axis Y. Substantially, the ribs 5 are oriented so to have a outer radial direction with respect to the axis Y.

The ribs 5 extend from the portion of the support S configured to contain the pivot of the roller up to the upper portion 3, protruding outwardly with respect to the rotational axis Y.

The vertical portions 4 of the support S can be monolithically connected each other through two opposite connection bands 18. These connection bands 18 have an architrave shape, preferably arched, and connect the upper portion 3 and the vertical portion 4 each other, strongly improving the resistance of the support S to lateral loads.

Each one of the vertical portions 4 of the support S comprises, in its lower part, a portion configured to contain and turnably support a roller R and in particular its pivot 14.

Said portion comprises a first sliding semi-cylindrical surface 8 configured to receive the pivot 14 and connection means 19 connectible to a blocking element 10.

Said connecting element 10 comprises a second sliding semi-cylindrical surface 17 which, together with the first sliding semi-cylindrical surface 8, realizes a cylindrical sliding surface configured to contain and swivel support the roller R or its pivot 14. The roller R is so radially blocked but free to rotate about the support axis Y.

Said sliding surfaces 8,17 can comprise a cylindrical bushing (not shown) to facilitate the rotation of the roller R. Alternatively, said sliding surfaces 8,17 can comprise respective circular traces wherein a lubricant can be arranged to facilitate the rolling.

Each of the blocking element 10 further comprises means 20 able to cooperate with said connection means 19 to realize a connection between the blocking elements 10 and the vertical portions 4 of the support S. Said connection means 20 can be four screws, each one for each connection mean 19. Said blocking elements 10 can have an arched shape having said means 20 at the end and said sliding semi-cylindrical surface 17 at an intermediate portion.

The circular holes that are obtained connecting the blocking element 10 to the vertical portions 4 of the support S can be closed through caps 11 configured to snap-fit themselves to respective vertical portions 4 and to the blocking elements 10.

These caps 11 avoid the entering of debris on the sliding surfaces 8,17. Moreover, said cups 11 can be personalized with the manufacturer or customer name or with the model of transformer on which can be installed, facilitating the choice of the support from the user which is operating the maintenance of the electric transformer.

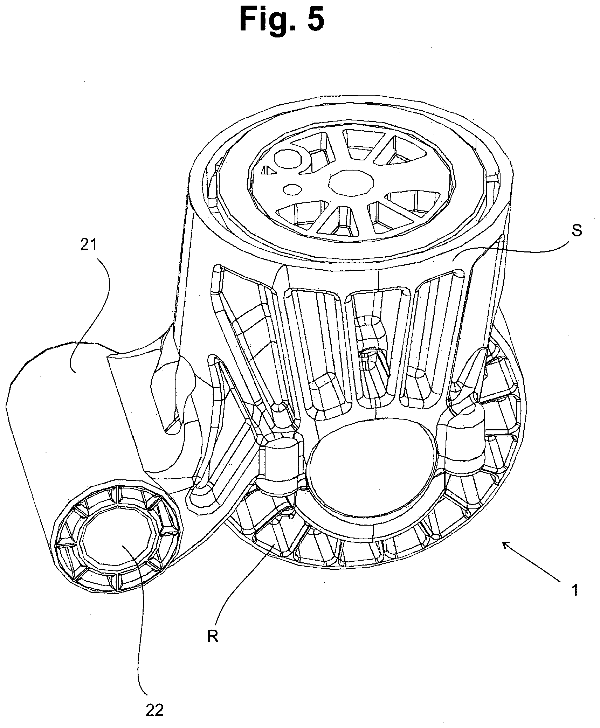

One or both said vertical portions 4 can comprise a pit configured to cooperate with a lever for facilitating the rotation of the support S with respect to the electric transformer according to the vertical axis Z. This pit (not shown) allows the insertion of a lever (not shown) in the vertical portion 4, so that a rotation of the support can be performed acting on the lever. According to a second embodiment of the support S, it can comprise, instead of said pit, a lateral protrusion 21, shown in figure 5, comprising a hole 22 for the insertion of a lever.

One or both of said vertical portions 4 can further comprise a stopping system 12 configured to stop the rotation of the roller R with respect to its rotational axis Y.

Preferably, this stopping system 12 comprises a passing through hole, preferably threaded, oriented parallel to the axis Y and arranged on one or both of said vertical portions 4.

Said hole allows the insertion of a rod or the threading of a bolt (not shown), able to cooperate with the roller R to stop its rotation. For example, in the case of a rod, this can be inserted up to reach the roller R, so that the rotation of the roller R is limited by the contact of the rod with the ribs 15 of the roller R.

This support S is realized entirely, or at least in all its parts except the caps 11 and/or the blocking elements 10 and/or the threaded element 6, in polyamide, also known as nylon, reinforced with glass fibers. Preferably, the used polyamide is of the type PA 6 or PA 6,6.

Furthermore, a weight percentage of glass fiber between 20% and 60% of standard type, is preferable. This percentage is particularly adapted for the use with distribution electric transformer, because laboratory tests have demonstrated high resistance levels to static and dynamics loads both radial or axial. Alternatively, this fiber can be carbon fiber.

Also the roller can be made of the same composite material.

The material above-described is particularly adapted for the injection moulding, allowing a fast and economic realization of the support S and roller R.

The injection moulding permits that finished pieces (support S or roller R) faithfully fit in term of dimensions and tolerances with the original design. This type of geometrical precision is not reachable with the cast iron rollers and with the metal supports actually known in the state of the art. This geometrical fidelity to the original project allows to facilitate the assembly of the wheel 1 for electric transformers, solving an inconvenient of the wheels actually available on the market.

Furthermore, these supports S and rollers R made of this material, can be resistant to the corrosion, for example the salt corrosion, and to the humidity, easily passing the tests of the rule NFA 91-020, without any surface coating.

The supports S and the rollers R so conceived are also adapted to ambient wherein the temperature is particularly rigid, thus extremely hot or extremely cold. In particular, they can resist to temperatures ranging from -30°C and +135°C.

Furthermore, the weight of support S and roller R in polyamide reinforced with glass fibers is lower than the weight of equivalent rollers available in the state of the art. Considering a roller R having a diameter of 125 mm and the relative support S, the simple support S weights about 500 gr and the entire wheel, thus the roller R and the support S, weights about 900 gr.

With reference to figure 3, said roller R comprises a pivot or shaft 14 integral to the rest of the roller. Roller and pivot are monolithic and consequently made in a single piece.

In a not shown embodiment of the roller R, it has a pass-through hole coaxial to the rotational axis. In the pass-through hole can be inserted a cylindrical shaft having a length able to come out on both sides when the shaft is inserted in the roller. In turn, this shaft can be connected to the vertical portions of the support through the couple of blocking elements.

The material used for manufacturing the roller R is polyamide, preferably polyamide PA 6 or PA 6,6, reinforced with glass fiber in a weight percentage comprised between 20% and 60%, preferably between 30% and 50%. The manufacturing method that can be used to mould is the injection.

The roller R comprises radial ribs 15 on both sides and preferably a central septum 23 oriented orthogonally to the rotational axis of the roller R.

Each rib 15 can have a "Y" shape with the root in proximity of the hub (or pivot) 14, to unload efficiently the forces toward the rotational axis.

The ribs 15 extend from the hub 14 to a cylindrical portion 16. The roller R so conceived can rotate through this cylindrical portion 16 on a planar surface or on the ground.

The roller R for electric transformers can have a diameter comprised between 30 and 300 mm, preferably between 125 and 200 mm.

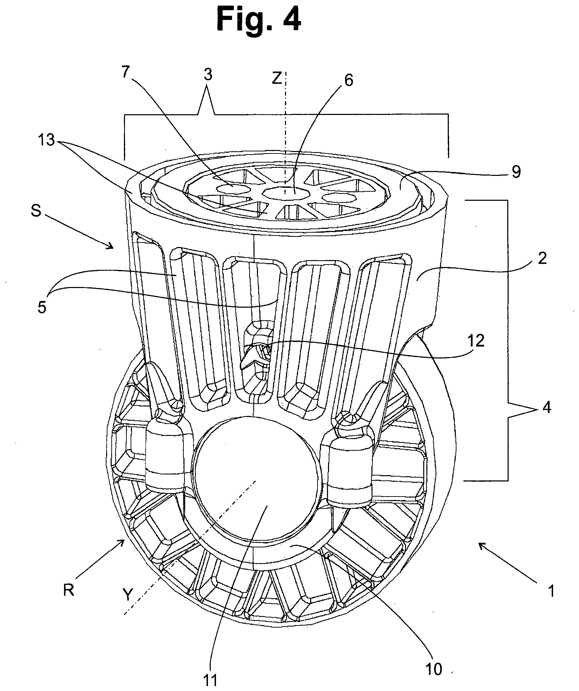

Figure 4 shows the system assembles, thus a wheel 1 comprising a roller R and a support S as above-described.

The assembly of said wheel 1 is particularly simplified with respect to the state of the art. It is enough to house the pivot 14 of the roller R on the sliding surface 8 of the support S, to position over the pivot 14 of the roller R the blocking elements 10 so to contact the connection means 19 of the support S, and finally to connect the two blocking elements 10 to the connection means 19 of the support S through the connecting means 20. The rolling surfaces can be lubricated during the assembly.

The wheel 1 so conceived can be transported easily for its low weight. The wheel is also resistant to the corrosion, to the humidity and to high temperatures because of its composite material. Furthermore, said wheel 1 can be easily manufactured through injection moulding and it is easy to be assembled, requiring only elementary workshop tools.

Finally, the use of glass fibres reinforce the nylon, providing to the wheel 1 high mechanical resistance properties to static and dynamic loads, both vertical and lateral.

In particular, said wheel 1 is configured to resist to a vertical load of 80 kN and a lateral load applied to the peripheral edge of the roller R of 2 kN.

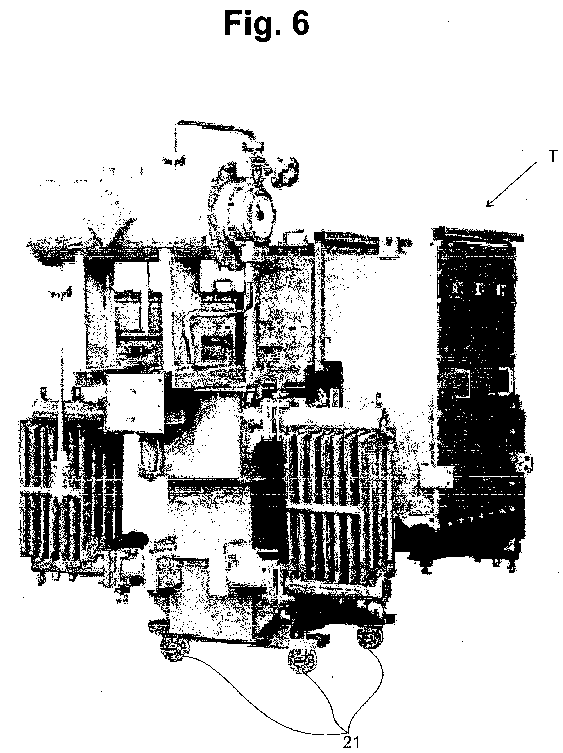

It is a final object of the present invention an electric distribution transformer T as shown in figure 6, wherein an electric transformer T, of the oil type, is supported by four wheels 1 according to the present invention.

The joining and the connection of the wheels according to the present invention to the electric transformer is clear from the above description of the support.

The support S, the roller R and the wheel 1 so conceived can be also employed to move heavy weight devices which are different from the electric transformers.

## Claims

1. Wheel support (S) for distribution electric transformer comprising:
- a fork (2) comprising:
- a upper portion (3) connectible to an electric transformer;
- two vertical portions (4) monolithically connected to the upper portion (3), each one comprising a portion configured to receive and turnably support a roller (R) and in particular a pivot of the roller (R);
- a couple of blocking elements (10) each one configured to be connected to one of the two vertical portions (4) of the support (S) to contain said roller (R) and in particular its pivot (14);
**characterised in that** the fork is made of a composite material and **in that** said vertical portions (4) comprise a plurality of ribs (5) bottom-up oriented.

2. Wheel support (S) according to claim 1, wherein said composite material is polyamide, preferably PA 6 or PA 6,6, glass fiber reinforced, and wherein preferably the weight percentage of glass fiber is comprised between 20% and 60%, more preferably between 30% and 50%.

3. Wheel support (S) according to any of preceding claims, wherein each rib of said plurality of ribs (5) is oriented in a substantially radial direction with respect to said portion configured to receive and turnably support the roller (R) and in particular the pivot of the roller (R).

4. Wheel support (S) according to any of preceding claims, comprising orientable rotable connection means for orienting the connection of the support (S) with respect to the electric transformer according to one or more directions, preferably said orientable rotable connection means comprising a threaded element (6), a first slot of the upper portion (3) configured to receive at least in part the threaded element (6) and to stop its rotation about a vertical axis (Z), said threaded element (6) being connectible with a complementary threaded element of the electric transformer for realizing said connection to the electric transformer.

5. Wheel support (S) according to claim 4, said orientable rotable connection means further comprise a hole (7) or a bump arranged on a contact surface (13) with the electric transformer of the upper portion (3) and configured to set one or more orientations of connection of said support (S) to said electric transformer.

6. Wheel support (S) according to any of preceding claims, wherein one or both of the vertical portions comprise a pit configured to cooperate with a lever for facilitating the rotation of the support (S) with respect to the electric transformer according to the vertical axis (Z).

7. Wheel support (S) according to any of preceding claims, further comprising an annular bush (9) or an axial bearing inserted in a second slot of the upper portion (3) of the support (S) and configured to assist the rotation of the support (S) with respect to the vertical axis (Z).

8. Wheel support (S) according to claim 1, further comprising a couple of caps (11) configured to be snap-fitted to respective vertical portions (4) and blocking elements (10).

9. Wheel support (S) according to any of preceding claims, wherein one or both of said vertical portions (4) of the support (S) comprise a stopping system (12) configured to prevent the rotation of the roller (R) with respect to its rotational axis (Y).

10. Wheel (1) for electric transformer comprising a support (S) according to one or more of preceding claims and a roller (R) entirely made of a composite material comprising a pivot (14) turnably connected to the support (S); preferably said pivot (14) is an integral part of the roller (R).

11. Wheel (1) according to claim 10, wherein said composite material of the roller (R) is polyamide, preferably PA 6 or PA 6,6, reinforced with glass fiber in a weight percentage comprised between 20% and 60%, preferably between 30% and 50%.

12. Wheel (1) according to claim 10 or 11, wherein said roller (R) comprises a plurality of radial ribs (15) extending on both side of the roller (R) from the pivot (14) to a portion substantially cylindrical (16) of the roller (R) configured to roll on a flat surface or on the ground.

13. Wheel (1) according to any of claims 10 to 12, wherein said roller (R) has a diameter comprised between 100 and 300 mm, preferably between 125 and 200 mm.

14. Wheel (1) according to claim 13 configured to resist to a vertical load of 80 kN and a lateral load applied to the peripheral edge of the roller (R) of 2 kN.

15. Electric distribution transformer comprising a plurality of wheels according to claim 13 or 14.

## Patentansprüche

1. Radstütze (S) für elektrischen Verteilertransformator, die folgendes umfasst:
- eine Gabel (2), die folgendes umfasst:
- ein Oberteil (3), das mit einem Elektrotransformator verbunden werden kann;
- zwei vertikale Teile (4), die monolithisch mit dem Oberteil verbunden sind (3), von denen jedes einen Teil umfasst, der so gestaltet ist, eine Rolle (R) aufzunehmen und sie drehbar zu unterstützen, und dabei besonders einen Drehzapfen der Rolle (R);
- ein paar Blockierelemente (10), von denen jedes so gestaltet ist, mit einem der vertikalen Teile (4) der Stütze (S) verbunden zu werden, um die besagte Rolle (R) und besonders ihren Drehzapfen (14) zu umfassen; wobei eine Charakterisierung dahingehend besteht, dass die Gabel aus einem Verbundstoff hergestellt ist und dass die besagten vertikalen Teile (4) eine Vielzahl an Rippen (5) enthalten, die von unten nach oben ausgerichtet sind.

2. Radstütze (S) gemäß Anspruch 1, wobei der besagte Verbundstoff aus Polyamid besteht, vorzugsweise PA 6 oder PA 6,6, glasfaserverstärkt, und wobei vorzugsweise das Gewichtsprozent der Glasfaser zwischen 20 % und 60 % liegt, vorzugsweise zwischen 30 % und 50 %.

3. Radstütze (S) gemäß aller vorhergehenden Ansprüche, wobei jede Rippe der besagten Vielzahl von Rippen (5) in einer im Wesentlichen radialen Richtung in Bezug auf den besagten Teil ausgerichtet ist, der so gestaltet ist, die Rolle (R) aufzunehmen und sie drehbar zu unterstützen und dabei besonders den Drehzapfen der Rolle (R).

4. Radstütze (S) gemäß aller vorhergehenden Ansprüche, die ausrichtbare drehbare Verbindungsmittel umfassen, um die Verbindung der Stütze (S) in Bezug auf den Elektrotransformator in eine oder mehrere Richtungen zu orientieren, wobei die besagten ausrichtbaren drehbaren Verbindungsmittel ein gewindebehaftetes Element (6) umfassen, eine erste Aufnahme des Oberteils (3), die so gestaltet ist, zumindest teilweise das gewindebehaftete Element (6) aufzunehmen und seine Rotation um eine vertikale Achse (Z) zu stoppen. Das besagte gewindebehaftete Element (6) kann mit einem komplementären gewindebehafteten Element des Elektrotransformators verbunden werden, um besagte Verbindung mit dem Elektrotransformator zu realisieren.

5. Radstütze (S) gemäß Anspruch 4, wobei die besagten ausrichtbaren drehbaren Verbindungsmittel weiterhin ein Loch (7) oder eine Erhebung umfassen, die auf einer Kontaktfläche (13) mit dem Elektrotransformator des Oberteils (3) angeordnet sind und so gestaltet sind, eine oder mehrere Ausrichtungen der Verbindung der besagten Stütze (S) zum besagten Elektrotransformator einzustellen.

6. Radstütze (S) gemäß aller vorhergehenden Ansprüche, wobei einer oder beide vertikale Teile eine Vertiefung umfassen, die mit einem Hebel zusammenwirkt, um die Rotation der Stütze (S) in Bezug auf den Elektrotransformator entsprechend der vertikalen Achse (Z) zu erleichtern.

7. Radstütze (S) gemäß aller vorhergehenden Ansprüche, die weiterhin eine ringförmige Buchse (9) oder ein Axiallager umfasst, das in eine zweite Aufnahme des Oberteils (3) der Stütze (S) eingelassen ist und so gestaltet ist, die Rotation der Stütze (S) in Bezug auf die vertikale Achse (Z) zu unterstützen.

8. Radstütze (S) gemäß Anspruch 1, die weiterhin ein paar Verschlusskappen (11) umfasst, die so gestaltet sind, in die vertikalen Teile (4) und Blockierelemente (10) einzurasten.

9. Radstütze (S) gemäß aller vorhergehenden Ansprüche, wobei einer oder beide der besagten vertikalen Teile (4) der Stütze (S) ein Anhaltesystem (12) umfassen, das so gestaltet ist, die Rotation der Rolle (R) in Bezug zu ihrer Rotationsachse (Y) anzuhalten.

10. Rad (1) für den Elektrotransformator, das eine Stütze (S) gemäß einem oder mehreren vorhergehenden Ansprüchen und eine Rolle (R) umfasst, die vollständig aus Verbundstoff hergestellt ist, und einen Drehzapfen (14) umfasst, der drehbar mit der Stütze (S) verbunden ist; vorzugsweise ist besagter Drehzapfen (14) ein integraler Bestandteil der Rolle (R).

11. Rad (1) gemäß Anspruch 10, wobei besagter Verbundstoff der Rolle (R) aus Polyamid besteht, vorzugsweise PA 6 oder PA 6,6, Glasfaser mit einem Gewichtsprozent zwischen 20 % und 60 %, vorzugsweise zwischen 30 % und 50 %.

12. Rad (1) gemäß Anspruch 10 oder 11, wobei besagte Rolle (R) eine Vielzahl an radialen Rippen (15) umfasst, die sich an beiden Seiten der Rolle (R) vom Drehzapfen (14) zu einem im Wesentlichen zylindrischen Teil (16) der Rolle (R) erstrecken, der so gestaltet ist, um auf einer flachen Oberfläche oder auf dem Boden zu rollen.

13. Rad (1) gemäß aller Ansprüche von 10 bis 12, wobei besagte Rolle (R) einen Durchmesser zwischen 100 und 300 mm hat, vorzugsweise zwischen 125 und 200 mm.

14. Rad (1) gemäß Anspruch 13, das so gestaltet ist, einer vertikalen Belastung von 80 kN und einer seitlichen Belastung von 2 kN, die auf dem äußeren Rand der Rolle (R) lastet, zu widerstehen.

15. Elektrischer Verteilertransformator, der eine Vielzahl von Rädern gemäß der Ansprüche 13 oder 14 umfasst.

## Revendications

1. Support de roue (S) pour transformateur électrique de distribution comprenant :
- une fourche (2) comprenant :
- une partie supérieure (3) raccordable à un transformateur électrique ;
- deux parties verticales (4) raccordées de façon monolithique à la partie supérieure (3), chacune comprenant une partie configurée pour recevoir et soutenir de façon rotative un rouleau (R), et en particulier un pivot de rouleau (R) ;
- deux éléments de blocage (10), chacun étant configuré pour être connecté à une des deux parties verticales (4) du support (S) pour contenir ledit rouleau (R), et en particulier son pivot (14) ;
**caractérisé en ce que** la fourche est réalisée avec une matière composite, et **en ce que** lesdites parties verticales (4) comprenant une pluralité de nervures (5) orientées du bas vers le haut.

2. Support de roue (S) selon la revendication 1, ladite matière composite étant un polyamide, de préférence PA 6 ou PA 6,6 renforcé de fibre de verre, et le pourcentage en poids de la fibre de verre étant compris de préférence entre 20 % et 60 %, mieux encore entre 30 % et 50 %.

3. Support de roue (S) selon une quelconque des revendications précédentes, chaque nervure de ladite pluralité de nervures (5) étant orientée dans une direction substantiellement radiale relativement à ladite partie configurée pour recevoir et soutenir de façon rotative le rouleau (R), et en particulier le pivot du rouleau (R).

4. Support de roue (S) selon une quelconque des revendications précédentes, comprenant un dispositif de raccordement rotatif orientable pour orienter le raccordement du support (S) relativement au transformateur électrique selon une ou plusieurs directions, de préférence ledit dispositif de raccordement rotatif orientable comprenant un élément fileté (6), une première fente de la partie supérieure (3) étant configurée pour recevoir au moins une partie de l'élément fileté (6), et pour arrêter sa rotation autour d'un axe vertical (Z), ledit élément fileté (6) pouvant être raccordé à un élément fileté complémentaire du transformateur électrique pour la réalisation dudît raccordement au transformateur électrique,

5. Support de roue (S) selon la revendication 4, ledit dispositif de raccordement rotatif orientable comprenant en outre un orifice (7) ou un bossage agencé sur une surface de contact (13) avec le transformateur électrique de la partie supérieure (3), et configuré pour établir une ou plusieurs orientations de raccordement dudit support (S) audit transformateur électrique.

6. Support de roue (S) selon une quelconque des revendications précédentes, une des parties verticales, ou les deux, comprenant une fosse configurée pour coopérer avec un levier pour faciliter la rotation du support (S) relativement au transformateur électrique en fonction de l'axe vertical (Z).

7. Support de roue (S) selon une quelconque des revendications précédentes, comprenant en outre une douille annulaire (9) ou un coussinet axial inséré dans une deuxième fente de la partie supérieure (3) du support (S), et configuré pour faciliter la rotation du support (S) relativement à l'axe vertical (Z).

8. Support de roue (S) selon la revendication 1, comprenant en outre deux chapeaux (11) configurés pour être raccordés par encliquetage à des parties verticales (4) et des éléments de blocage (10) respectifs.

9. Support de roue (S) selon une quelconque des revendications précédentes, une des parties verticales (4) du support (S), ou les deux, comprenant un système d'arrêt (12) configuré pour empêcher la rotation du rouleau (R) relativement à son axe de rotation (Y).

10. Roue (1) pour transformateur électrique comprenant un support (S) selon une ou plusieurs des revendications précédentes, et un rouleau (R) entièrement réalisé avec une matière composite comprenant un pivot (14) raccordé de façon rotative au support (S), ledit pivot (14) faisant de préférence partie intégrante du rouleau (R).

11. Roue (1) selon la revendication 10, ladite matière composite du rouleau (R) étant un polyamide, de préférence PA 6 ou PA 6,6 renforcé de fibre de verre, dans un pourcentage en poids compris entre 20 % et 60 %, de préférence entre 30 % et 50 %.

12. Roue (1) selon la revendication 10 ou 11, ledit rouleau (R) comprenant une pluralité de nervures radiales (15) déployées des deux côtés du rouleau (R) du pivot (14) sur une partie substantiellement cylindrique (16) du rouleau (R), configurée pour rouler sur une surface plate ou sur le sol.

13. Roue (1) selon une quelconque des revendications 10 à 12, le diamètre dudit rouleau (R) étant compris entre 100 et 300 mm, de préférence entre 125 et 200 mm.

14. Roue (1) selon la revendication 13, configurée pour résister à une charge verticale de 80 kN et une charge latérale, appliquée sur le bord périphérique du rouleau (R), de 2 kN.

15. Transformateur de distribution électrique, comprenant une pluralité de roues selon la revendication 13 ou 14.
